# EUROPEAN PATENT APPLICATION

(11) **EP 4 440 039 A1**
(43) Date of publication of application: **02.10.2024**
(21) Application number: 23164537.5
(22) Date of filing: 28.03.2023
(51) Int. Cl.: H04L 9/40

(54) **COMPUTER-IMPLEMENTED METHOD FOR CONTROLLING SECURITY PARAMETERS OF A MACHINE IN A MACHINE SYSTEM**

(71) Applicant: Siemens Aktiengesellschaft, 80333 München (DE)
(72) Inventor: Gellér, Dóra, 1183 Budapest (HU); Hegmann, Michael, 91126 Schwabach (DE); Nagy, Viktor2, 2112 Veresegyház (HU); Szabó, Zoltán2, 1108 Budapest (HU)
(74) Representative: Siemens Patent Attorneys

(57) **Abstract**

Computer-implemented method for controlling security parameters of a machine in a machine system, comprising the steps of
- creating a list of security parameters to be set containing a subgroup of security parameters,
- displaying the security parameters of the list of security parameters to be set to the user for entering settings for the security parameters,
- after entering the settings for all security parameters of the list of security parameters to be set, generating and displaying to the user a report form containing the list of security parameters to be set and entered settings for the machine and
- after confirmation of the displayed report form by the user setting the security parameters for the machine according to the report form.

Thus a quicker way to configure the security settings of a machine is provided.

## Description

### FIELD OF THE INVENTION

The present invention relates to a computer-implemented method for controlling security parameters of a machine in a machine system, to a respective computer program product and to a respective computer-implemented device. The present invention can be part of a computer-implemented method for controlling a machine system comprising several machines.

### STATE OF THE ART

A computer-implemented method for controlling a machine system is known and a respective computer program product is offered by the applicant as Totally Integrated Automation Portal (TIA Portal). It allows a user to completely access all of the digitalized automation extending from digital planning through integrated engineering up to operation of the machine system. The TIA Portal includes a computer program product called Startdrive which is used to integrate new machines, such as drives, into the automation computer program, here TIA Portal, of an existing machine system. For Startdrive the same user interface can be used as for TIA Portal. Thus new machines can quickly be integrated into the automation environment and commissioned using the TIA Portal.

With TIA Portal a wide range of applications can be implemented, especially for drives. These extend from variable-speed axes - such as pumps, fans, mixers, conveyor belts etc. - through positioning axes up to high-end motion control applications - for example handling systems, storage and retrieval machines and packaging machines. Because the user always works with the TIA Portal and its user interface it is not important whether these motion functions are realized in the controller of the machine, e.g. in the controller of a drive, or in the machine drive itself. The TIA Portal can e.g. provide the motion control, closed-loop control and diagnostics of the axes of a drive. Users are guided through the parameterization of the controller and the drive.

The users have the possibility to parameterize their machine via Startdrive supported by user-friendly wizards and screen forms. The various steps are structured according to the particular task, especially by using a structured workflow. In particular parameterization of the security functions integrated in the machine, e.g. a drive, using graphic screen forms is possible. Based on a transparent parameter list, experienced users can work quickly and efficiently.

With regard to the security functions, however, it is not easy to configure the security settings of a drive because it needs around 20 to 30 steps to complete the process of configuring the security settings.

### SUMMARY OF THE INVENTION

So one object of the present invention is to provide a quicker way to configure the security settings of a machine, e.g. the security settings of a drive.

This object is achieved by a computer-implemented method for controlling security parameters of a machine in a machine system according to claim 1 and comprises the steps of
- creating a list of security parameters to be set containing a subgroup of security parameters,
- displaying the security parameters of the list of security parameters to be set to the user for entering settings for the security parameters,
- after entering the settings for all security parameters of the list of security parameters to be set, generating and displaying to the user a report form containing the list of security parameters to be set and entered settings for the machine and
- after confirmation of the displayed report form by the user setting the security parameters for the machine according to the report form.

These steps accomplish a security wizard or security assistant for the most important security settings of the machine, e.g. a drive, because only a subgroup of parameters to be set is displayed to the user which subgroup comprises the most important parameters to be set. So the list of security parameters to be set normally contains only such parameters which are very important to be set by the user. Thus the number of parameters to be set by the user is reduced and the process of configuration of the security settings is shortened. Additionally, for configuration of the security settings the user need not have deep expert knowledge.

When displaying the security parameters of the list of security parameters to be set to the user it is possible that one or more security parameters are displayed at once in a first step, and the user enters settings for those security parameters. Following this first step again one or more security parameters can be displayed at once in a second step, and the user enters settings for those security parameters. Further steps can follow. After the last step (which can be the first step, the second step and so on), when all settings for all security parameters of the list of security parameters to be set have been entered, a report form containing all security parameters to be set and all entered settings is generated and then displayed to the user. Only if the user has confirmed the displayed report form, which - according to one embodiment of the invention - can be done by a single action of the user, like clicking one button on the displayed report form, all security parameters of the list of security parameters to be set (by the user) for the machine are set according to the report form. So the entered settings are forwarded to the computer program for controlling the machine system, such as the TIA Portal, and/or to the controller of the respective machine.

The security parameters to be set by the user can comprise settings regarding access to the machine and from the machine, i.e. data access, e.g. allowance to enter data or to read out data, and/or control access, e.g. allowance to send commands to the machine. These security parameters especially can comprise:
- Who has data access to the machine?
- Who can change settings of the machine?
- Who is the administrator for that machine?
- Which communication channels to and from the machine are allowed?
- Is a certain communication method enabled or disabled?
- Are there any guest users allowed?
- Should sensible data be encrypted?
- Should auditable events be recorded?

Acordingly, the settings to be entered by the user can be names, yes/no answers, etc. The possible settings of a certain security parameter can be displayed to the user in a drop-down menu so that the user can choose the right one out of a number of possible ones.

The security parameters which have to be set but which are not part of the list of security parameters to be set by the user can comprise:
- Protocols to be used for communication with the machine
- Addresses for communication
- Time out for specific communication sessions of the machine, e.g. of the drive
- Parameters relating to safety configuration
- Parameters relating to certificate handling
- Time synchronization method
- Password rules and passwort ageing

Those security parameters can be prefilled with settings that are recommended for operation and which enable the user to configure least functionality. Setting those security parameters would as a rule involve expert knowledge.

According to one embodiment of the invention the machine system is analyzed in terms of the security parameters and the list of security parameters to be set is updated.

So if there were changes in the machine system, e.g. the data communication standard with or within the machine system has changed, the list of security parameters to be set by the user is updated. Updating here means that either there is no change in the machine system and the former list of security parameters needs no change and only the validity of this version of the list is confirmed. Or there was a security relevant change in the machine system so that the list of security parameters has to be changed and new security parameters are added or existing security parameters are deleted, or the possible settings which the user can choose are changed.

According to one embodiment of the invention creating the list of security parameters to be set is done via an automated access to a database comprising at least one list of security parameters to be set. So the lists of security parameters to be set for different machines are stored in a database and loaded and displayed to the user whenever necessary. In such a database also outdated lists of security parameters to be set can be saved.

According to one embodiment of the invention the list of security parameters to be set is prefilled with default settings. So even if the number of security parameters in the list of security parameters to be set by the user is already reduced compared to all security parameters that can be set, it speeds up the configuration of the security settings if at least one or if several security parameters in the list of security parameters to be set by the user are prefilled with default settings and the user does not have to enter security settings manually.

The default settings can be settings that are recommended for operation and which enable the user to configure least functionality. The default settings should allow commissioning of the machine system so it is advisable that the highest reasonable security settings are chosen as default settings.

According to one embodiment of the invention the method allows the settings of all security parameters, which are comprised by the list of security parameters to be set, to be confirmed with a single action of the user. So at the end of the configuration process all security parameters and all respective settings are displayed to the user and the user can confirm all those settings at a time, e.g. by clicking a respective button. This way a one click configuration is accomplished.

According to one embodiment of the invention the method allows the settings of another machine to be copied instead of entering the settings for the security parameters of the list of security parameters to be set by the user. So at the beginning of the configuration process the user is asked if he wants to copy the security settings of another machine which is already configured and which machine is similar or identical to the machine to be configured. The user then can choose the machine from which the security parameters shall be copied. Then the list of security parameters to be set is displayed as usual, in one or more steps, but already with the settings of the other machine filled in and the user can check the settings once more step by step before confirming them on the report form. Or the report form, showing all security parameters at once, is directly presented to the user as soon as the user has chosen to import the security settings of another machine. Then the user can confirm all security parameters at once.

According to one embodiment of the invention if during analysing the machine system another machine is detected which has been added to the machine system, the steps of claim 1 are applied to the other machine. That is, if a new machine is added to the system the user is prompted to configure the security settings for this new machine. So a list of security parameters to be set is created for this new machine, it is displayed to the user so that the user can enter the settings for the security parameters, the report form containing all security parameters and respective settings of the new machine is displayed and the user can confirm the settings preferably with one click. Again, also here the user can choose to import, i.e. to copy, the security settings of a machine which already has been integrated into the machine system before.

The same process can be applied if only a part of a machine has been replaced or the configuration of this part has been amended, e.g. if an electric converter for a drive has been replaced or has been in the reset state or the configuration of the converter has been amended in such a way that security settings of the list of security parameters to be set are affected. So also in this case the user would be prompted to review the security settings for this machine according to the method of the invention.

According to one embodiment of the invention the steps of claim 1 are applied if one of the settings of the security parameters comprised by the list of all security parameters to be set was amended by another user. So if someone else has changed the security settings of a certain machine the user who is responsible for security changes is prompted to review the security settings (following the method according to the invention using the security wizard) and to confirm the security settings as amended by the other user via confirmation of the report form. Of course the user who is responsible for security changes can also change the security settings of the other user before confirming the settings in the report form.

According to one embodiment of the invention the steps of claim 1 are applied if a reset of the machine system was performed. So if there was a reset of the machine system the user responsible for security settings is prompted to check the security settings of the single machines in the machine system, following the method according to the invention using the security wizard for each machine of the machine system.

The invention also refers to a computer program product comprising instructions to cause a computer of the machine system to perform all the steps of a method according to one of the method claims. So in any case the computer program product will cause a computer which is connected to the machine system
- to create a list of security parameters to be set containing a subgroup of security parameters,
- to display the security parameters of the list of security parameters to be set to the user for entering settings for the security parameters,
- after the user has entered the settings for all security parameters of the list of security parameters to be set, to generate and to display to the user a report form containing the list of security parameters to be set and entered settings for the machine and
- after confirmation of the displayed report form by the user to set the security parameters for the machine according to the report form.

The invention also refers to a computer-implemented device comprising the machine system which device is adapted to execute a method according to one of the method claims.

The computer-implemented device comprises the machine system and at least one computer connected to the machine system. The computer is connected to at least one display for displaying information to the user, namely the list of security parameters to be set and the report form, and to an input device where the user can enter the settings of the security parameters and confirm the settings. The input device can e.g. comprise a keyboard and a computer mouse.

### WAYS TO IMPLEMENT THE INVENTION

In an automation computer program for a system of several machines, e.g. in the Totally Integrated Automation Portal (TIA Portal), a computer program, e.g. Startdrive, to integrate new machines is started. In Startdrive the user can either actively start the security wizard according to the invention if a machine shall be integrated into the automation computer program. Or the Startdrive program prompts the user to use the security wizard in case the list of security parameters to be set has been updated, or another machine has been added, or a part of a machine has been replaced or the configuration of this part has been amended, or another user has amended security parameters contained in the security wizard, or if a reset of the machine system was performed.

At the beginning a start page of the computer-implemented method for controlling security parameters of a machine in a machine system is opened and displayed where the user can choose to copy the security settings of an already integrated machine or to edit the settings of this machine. In case the user chooses to edit the settings another page, or window within the page, with one or more security parameters is displayed and the user enters settings for those security parameters or amends prefilled default settings or does not amend prefilled default settings. Several such pages/windows may follow. After such last page/window with settings to enter another page/window with the report form opens and displays all security parameters to be set and all entered settings. The user has to confirm the displayed report form with one click to a button on this page/window, or he can go back to preceding pages/windows if he wants to amend the displayed settings. The confirmed settings are then automatically entered in the necessary programs, like the TIA Portal, and/or forwarded to the controller of the respective machine.

In another embodiment of the invention, if and only if a machine, e.g. a drive, is added to the machine system for the first time (so only once per machine), a start page can be displayed where the user can select whether he wants to configure security settings on his own or just wants to preset low security settings. Only in case the user chooses to configure security settings he will be shown the start page of the computer-implemented method where the user can choose to copy the security settings of an already integrated machine or to edit the settings of this machine.

Independent of the grammatical term usage, individuals with male, female or other gender identities are included within the term.

## Claims

1. Computer-implemented method for controlling security parameters of a machine in a machine system,
**characterized in that** the computer-implemented method comprises the steps of
- creating a list of security parameters to be set containing a subgroup of security parameters,
- displaying the security parameters of the list of security parameters to be set to the user for entering settings for the security parameters,
- after entering the settings for all security parameters of the list of security parameters to be set, generating and displaying to the user a report form containing the list of security parameters to be set and entered settings for the machine and
- after confirmation of the displayed report form by the user setting the security parameters for the machine according to the report form.

2. Method according to claim 1, **characterized in that** the machine system is analyzed in terms of the security parameters and the list of security parameters to be set is updated.

3. Method according to claim 1 or 2, **characterized in that** creating the list of security parameters to be set is done via an automated access to a database comprising at least one list of security parameters to be set.

4. Method according to one of the preceding claims, **characterized in that** the list of security parameters to be set is prefilled with default settings.

5. Method according to one of the preceding claims,
**characterized in that** it allows the settings of all security parameters, which are comprised by the list of security parameters to be set, to be confirmed with a single action of the user.

6. Method according to one of the preceding claims,
**characterized in that** it allows the settings of another machine to be copied instead of entering the settings for the security parameters of the list of security parameters to be set by the user.

7. Method according to one of the preceding claims,
**characterized in that** if during analysing the machine system another machine is detected which has been added to the machine system, the steps of claim 1 are applied to the other machine.

8. Method according to one of the preceding claims,
**characterized in that** if during analysing the machine system it is detected that a part of a machine has been replaced or the configuration of this part has been amended, the steps of claim 1 are applied for this machine.

9. Method according to one of the preceding claims,
**characterized in that** the steps of claim 1 are applied if one of the settings of the security parameters comprised by the list of all security parameters to be set was amended by another user.

10. Method according to one of the preceding claims,
**characterized in that** the steps of claim 1 are applied if a reset of the machine system was performed.

11. Computer program product **comprising** instructions to cause a computer of the machine system to perform all the steps of a method according to one of claims 1 to 10.

12. Computer-implemented device **comprising** the machine system which device is adapted to execute a method according to one of claims 1 to 10.
